# FASCICULE DE BREVET EUROPEEN

(11) **EP 1 650 100 B1**
(45) Date de publication et mention de la délivrance du brevet: **11.07.2007**
(21) Numéro de dépôt: 05292207.7
(22) Date de dépôt: 20.10.2005
(51) Int. Cl.: B62B 5/00

(54) **Dispositif de traitement de produits alimentaires monté sur roulettes**
Auf Rollen montierte Vorrichtung zur Behandlung von Nahrungsmitteln
Apparatus for the treatment of food products mounted on wheels

(30) Priorité: 22.10.2004 FR 0411305
(43) Date de publication de la demande: 26.04.2006
(73) Titulaire: Electrolux Professionnel, 60300 Senlis (FR)
(72) Inventeur: Roussat, Bruno, 23200 Saint Amand (FR); Bernard, Marc, 23150 Lepinas (FR)
(74) Mandataire: Domenego, Bertrand

(56) Documents cités:
- DE-A1- 10 108 562
- DE-A1- 10 126 962
- US-A- 3 422 929
- US-A- 4 846 493
- US-A1- 2002 144 846

## Description

La présente invention concerne un dispositif de traitement de produits alimentaires comprenant
- un corps,
- un support, sur lequel est monté le corps et possédant des pieds d'appui au sol, et
- un mécanisme de roulement doté de roulettes, prévu pour permettre le déplacement du dispositif par roulement sur le sol.

On pourra par exemple se référer au document US-A-4 846 493 qui décrit un dispositif selon le préambule de la revendication 1.

L'invention concerne plus particulièrement le domaine des appareils de préparation alimentaire industrielle ou pour collectivités, ces appareils se caractérisant par une taille et un poids relativement importants.

Pour cette raison, ces appareils sont généralement placés à demeure à un emplacement déterminé d'une salle de préparation ou d'une cuisine, et ne sont déplacés qu'occasionnellement. Compte-tenu de la stabilité nécessaire à une utilisation correcte d'un tel appareil, ce dernier est maintenu en appui sur ses pieds lors de son fonctionnement, et le mécanisme de roulement utilisé pour déplacer l'appareil est généralement un chariot distinct sur lequel on place provisoirement l'appareil.

Certains appareils multifonctions, prévus pour réaliser différentes opérations dans la chaîne de préparation alimentaire, ont cependant une souplesse d'utilisation limitée par le fait que certaines réglementations en vigueur dans le domaine de la restauration collective interdisent la réalisation de plusieurs opérations de préparation en un même lieu.

Il est donc nécessaire, pour accroître la souplesse d'utilisation de ces appareils, de rendre plus facile leurs déplacements d'un point à un autre de la chaîne de préparation alimentaire.

Il est également souhaitable de rendre plus faciles les déplacements de ces appareils entre leur lieu d'utilisation et des zones de nettoyage ou de stockage, notamment.

L'invention a pour but d'atteindre cet objectif sans compromettre la stabilité de l'appareil en utilisation.

Ce but est atteint par l'invention, qui a pour objet un dispositif selon la revendication 1.

D'autres caractéristiques de l'invention sont énumérées dans les revendications dépendantes.

Un mode particulier de réalisation de l'invention va maintenant être décrit en référence aux dessins annexés, sur lesquels :
- la Figure 1 est une vue en perspective d'un dispositif selon l'invention ;
- la Figure 2 est une vue en perspective, à plus grande échelle, du mécanisme de roulement du dispositif de la Figure 1, seul;
- la Figure 3 est une vue en coupe dans un plan médian vertical, suivant la direction 3-3, du mécanisme de la Figure 2 en configuration escamotée ; et
- la Figure 4 est une vue analogue à la Figure 3, en configuration de roulement.

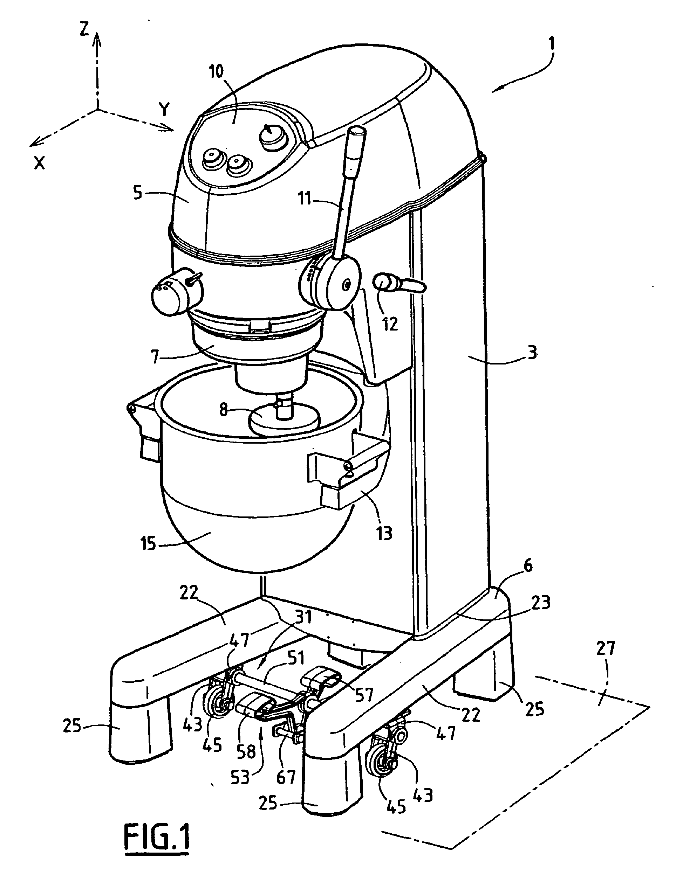

Sur la Figure 1, on a représenté un dispositif 1 de traitement de produits alimentaires selon l'invention. Dans l'exemple représenté, le dispositif est constitué d'un appareil du type batteur-mélangeur, prévu pour être utilisé dans le domaine de la boulangerie-pâtisserie, ou dans la domaine de la préparation alimentaire pour collectivités.

Bien entendu, l'invention pourrait être illustrée avec d'autres types d'appareils, tels que des éplucheuses, des trancheuses, ou encore des mixeurs.

Dans la partie de description faite en référence à la Figure 1, l'appareil sera supposé être dans sa position d'utilisation, en appui sur le sol, telle que représentée.

L'appareil 1 est orienté suivant un système d'axes X, Y, Z, dans lequel :
- l'axe X est l'axe horizontal, orienté de l'appareil vers l'emplacement prévu pour l'utilisateur, cette orientation étant supposée d'arrière en avant ;
- l'axe Y est l'axe horizontal transversal ; et
- l'axe Z est l'axe vertical orienté du bas vers le haut.

Tous les termes de direction et de position s'entendront par rapport à ce système d'axes.

Comme cela est visible sur la Figure 1, l'appareil 1 comporte essentiellement un corps 3, doté d'une tête 5 qui contient un moteur électrique, et un support 6, sur lequel est monté le corps 3, et par l'intermédiaire duquel l'appareil repose sur le sol.

Sur la tête 5 est monté un porte-outils 7, orienté verticalement vers le bas, qui est destiné à transmettre le mouvement en sortie de moteur à un outil 8.

Le corps 3 est pourvu d'une pluralité d'organes de commande, tels que des boutons agencés sur un panneau de commande 10, et des leviers de manoeuvre 11, 12.

Le corps 3 est solidaire de deux bras de support 13, espacés pour recevoir en appui un récipient 15, dans lequel peut être plongé l'outil 8, en fonctionnement de l'appareil.

Dans l'exemple représenté, le support 6 comporte essentiellement deux barres portantes 22 s'étendant sensiblement parallèlement suivant l'axe X, et espacées transversalement. Les barres 22 sont solidaires de la base 23 du corps 3 au niveau de leur partie arrière.

Le support 6 comporte, à chaque extrémité des barres 22, un pied d'appui 25 s'étendant essentiellement de façon verticale, et reposant par sa face inférieure sur la surface d'appui 27 constituée par le sol.

L'appareil 1 comprend en outre un mécanisme de roulement 31, prévu pour permettre le déplacement de l'appareil 1 par roulement sur le sol. Le mécanisme 31 est prévu pour s'escamoter lors de l'utilisation de l'appareil, en laissant les pieds 27 en appui sur le sol.

Le mécanisme de roulement 31 est fixé sous les deux barres portantes 22, du côté avant, et du côté arrière au droit de la base 23 du corps.

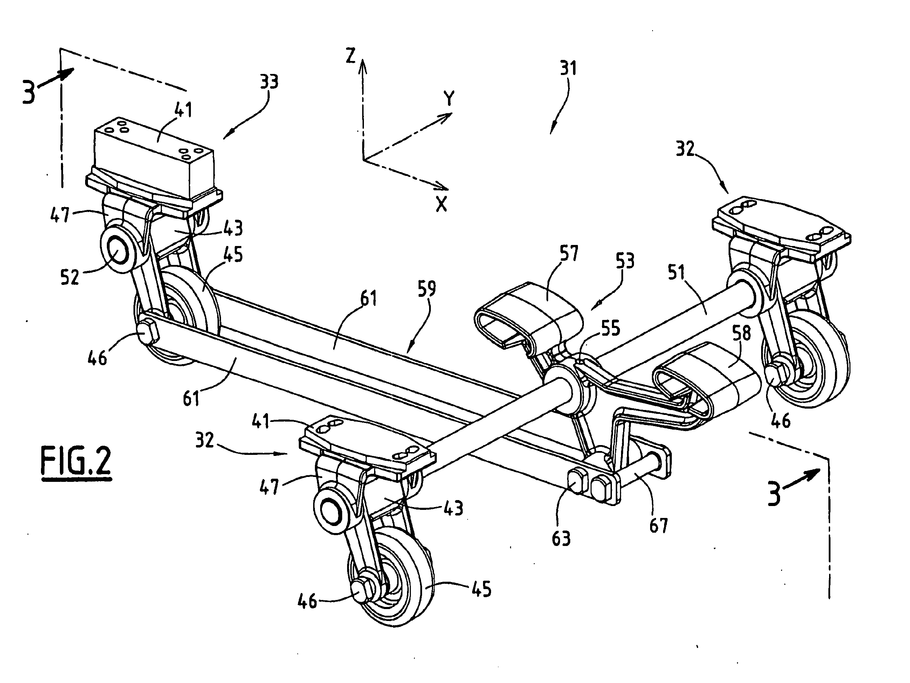

Le mécanisme 31 va maintenant être décrit plus en détail en référence aux Figures 2 à 4.

Le mécanisme 31 comprend trois sous-ensembles analogues 32, 33 de support roulant.

Chacun de ces sous-ensembles 32, 33 comprend une platine de montage 41 fixée au support 6, une chape de roue 43, et une roulette 45, montée rotative autour de son axe dans la chape 43. L'axe de rotation de la roulette s'étend transversalement, selon la direction Y, et est matérialisé par un arbre de roulette 46.

La platine 41 présente un étrier 47, dans lequel est montée pivotante la chape 43, autour d'un axe de basculement transversal, parallèle à l'axe de la roulette 45.

Deux sous-ensembles 32 sont disposés à l'avant du mécanisme 31, de façon que les axes de basculement des deux chapes 43 correspondantes soient alignés. Cet axe de basculement commun est matérialisé par un arbre 51, solidaire de chacune des deux chapes avant 43 au moyen d'une goupille (non représentée), et monté libre en rotation dans les étriers 47.

L'autre sous-ensemble 33 est agencé à l'arrière du mécanisme 31, dans le plan médian vertical du mécanisme 31, de sorte que ce dernier présente une symétrie par rapport à ce plan médian vertical.

De façon analogue aux sous-ensembles avant 32, la roulette 45 du sous-ensemble arrière 33 est montée rotative dans sa chape 43, laquelle est montée pivotante dans son étrier 47. L'arbre matérialisant l'axe de basculement de la chape dans l'étrier est désigné par la référence 52.

Les axes de rotation de la roulette arrière 45 dans la chape 43, d'une part, et de basculement de la chape 43 dans l'étrier 47, d'autre part, s'étendent parallèlement à ceux des sous-ensembles avant 32.

Le mécanisme comprend en outre, agencé dans le plan médian vertical, un levier de manoeuvre 53 solidarisé à l'arbre 51 au moyen d'une goupille 55.

Ce levier 53 présente deux surfaces distinctes d'actionnement par pression, définies par deux pédales 57, 58. Les pédales 57, 58 sont agencées respectivement à l'arrière et à l'avant de l'arbre 51, de sorte qu'une pression exercée sur l'une des pédales 57, 58 produit une rotation en sens opposé à celui d'une rotation produite par pression sur l'autre pédale.

Dans l'exemple représenté, les deux surfaces d'appui sont prévues sur deux branches distinctes du levier, mais elles pourraient être constituées de deux zones d'une même branche de levier, ou d'une même pédale.

Le mécanisme 31 comprend en outre un bras de liaison rigide 59, reliant le levier 53 à la chape 43 du sous-ensemble arrière 33. Ce bras de liaison 59 s'étend selon l'axe X, et est constitué essentiellement de deux barres parallèles 61.

Le levier 53 est monté rotatif sur le bras de liaison 59, à l'avant de ce dernier, autour d'un arbre transversal 63 reliant les deux barres 61.

Du côté opposé du bras de liaison 59, les deux barres 61 sont reliées par l'arbre 46 de la roulette arrière 45, cette dernière étant ainsi montée rotative entre les barres 61 du bras de liaison.

Le bras de liaison 59 comprend en outre une tige 67 de jonction des deux barres 61, agencée transversalement à l'avant de l'arbre 63, de façon à définir une butée d'arrêt en rotation pour le levier 53.

Comme cela apparaît sur la Figure 1, les platines 41 des sous-ensembles avant 32 sont fixées sous les barres portantes 22, vers l'avant de ces dernières, de façon que les pédales 57, 58 soient accessibles pour un utilisateur placé devant l'appareil 1, et que le levier 53 soit dégagé du support 6.

La platine 41 du sous-ensemble arrière 33 est, elle, fixée sous le support 6, au droit de la base du corps 3, comme cela a été évoqué précédemment.

Les platines 41 des trois sous-ensembles 32, 33 définissent ensemble une structure de montage, qui est déformable avant montage du mécanisme 31 sur le support 6, puisque les platines ne sont alors pas reliées rigidement les unes aux autres. Les platines 41 ne sont rigidement liées entre elles que par l'intermédiaire du support 6, c'est-à-dire à partir du moment où le mécanisme 31 est monté sur le support 6.

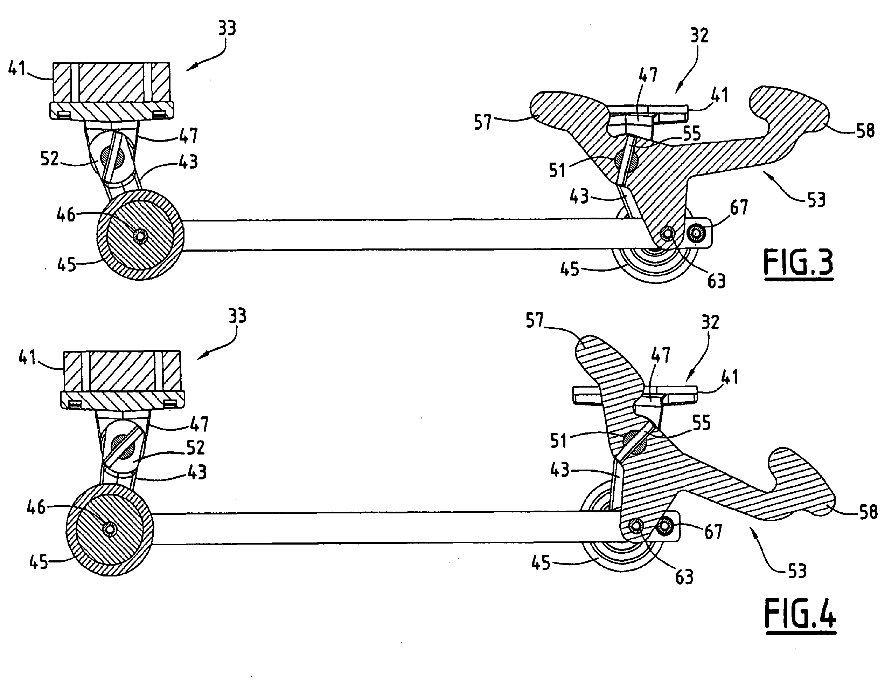

Le mécanisme 31 est conçu pour pouvoir prendre sélectivement une (ou des) configuration(s) escamotée(s), telle(s) que représentée(s) sur les Figures 1 à 3, et une configuration de roulement, telle que représentée sur la Figure 4.

Dans la (ou les) configuration(s) escamotée(s), les pieds de support 25 portent sur le sol 27, les roulettes 45 pouvant également toucher le sol, mais n'assurant pas le support de l'appareil.

Dans la configuration de roulement, les pieds sont soulevés du sol 27, et l'appareil 1 repose sur le sol par l'intermédiaire des roulettes 45 uniquement.

A partir de la position escamotée représentée sur la Figure 3, une pression sur la pédale 58 située à l'avant de l'arbre 51 entraîne un basculement des chapes avant 43 dans le sens horaire (selon la direction d'observation de la Figure 3), solidairement avec la rotation de l'arbre 51. Ce même mouvement de basculement est transmis à la chape arrière 43 par l'intermédiaire du bras de liaison 59, ce dernier subissant un recul sensiblement suivant son axe.

Le basculement des chapes 43 fait passer les arbres de roulette 46 à l'arrière des arbres respectifs 51, 52 de basculement, jusqu'à la position de blocage, définie par la venue en butée du levier 53 sur la tige d'arrêt 67. Cette position est illustrée sur la Figure 4.

Dans cette position de blocage des chapes 43 dans leurs étriers 47 respectifs, les roulettes 45 sont portantes.

Les chapes sont alors dans une position stable par rapport aux étriers, du fait que l'axe de rotation des roulettes 45 soit à l'arrière de l'axe de basculement des chapes 43. Le poids de l'appareil tend à faire basculer les chapes dans le même sens horaire, le mouvement de basculement dans ce sens étant arrêté par la butée du levier 53 sur la tige d'arrêt 67.

On comprend que, de façon inverse, pour faire passer le mécanisme 31 de sa configuration de roulement (Figure 4) à sa configuration escamotée (Figure 3), il est nécessaire d'appliquer une pression sur la pédale arrière 57. Une telle pression produit dans un premier temps le soulèvement de l'appareil 1 sur les roulettes, puis, après passage de l'axe de rotation des roulettes 45 au droit de l'axe de basculement des chapes 43, une redescente de l'appareil jusqu'à l'appui des pieds 25 au sol.

Aucune butée d'arrêt pour le levier 53 n'est nécessaire dans ce sens de pivotement, puisqu'après venue en appui des pieds 25, les chapes 43 ne sont plus sollicitées en basculement par le poids de l'appareil. Les roulettes 45 sont alors libres de venir en contact avec le sol, mais n'assurent plus le support de l'appareil.

Un avantage important de l'invention est que le mécanisme de roulement, qui est destiné à être fixé à demeure sous le support de l'appareil, peut être monté de façon optionnelle sur un appareil standard.

## Revendications

1. Dispositif de traitement de produits alimentaires comprenant
- un corps (3),
- un support (6), sur lequel est monté le corps, et
- un mécanisme de roulement (31) doté de roulettes (45), prévu pour permettre le déplacement du dispositif (1) par roulement sur le sol (27),
le mécanisme (31) étant fixé au support (6), et adapté pour pouvoir prendre sélectivement une configuration escamotée, et une configuration de roulement, dans laquelle les roulettes (45) portent sur le sol,
le mécanisme (31) comprenant un levier de manoeuvre (53), dont l'actionnement permet de passer d'une configuration à une autre, **caractérisé en ce que**
le support (6) possède des pieds (25) d'appui au sol, les pieds (25) du support portant sur le sol dans la configuration escamotée, et étant soulevés du sol dans la configuration de roulement
et **en ce que** le mécanisme (31) comprend une structure de montage (41) sur laquelle est fixé le support (6), un train avant et un train arrière de roulettes, chaque roulette (45) étant susceptible de tourner autour de son axe, et de basculer autour d'un axe parallèle sous l'effet de l'actionnement du levier de manoeuvre (53), entre une position escamotée et une position portante.

2. Dispositif suivant la revendication 1, **caractérisé en ce que** le mécanisme (31) comprend un bras de liaison (59) permettant de lier le basculement des roulettes (45) du train avant et du train arrière.

3. Dispositif suivant la revendication 1 ou 2, **caractérisé en ce que** chaque roulette (45) est montée rotative autour de son axe dans une chape en U (43), laquelle est montée basculante sur la structure (41).

4. Dispositif suivant la revendication 3, **caractérisé en ce que** les roulettes (45) du train avant ont un axe de basculement commun, matérialisé par un arbre (51), solidaire du levier de manoeuvre (53) et des chapes (43) des roulettes (45) du train avant.

5. Dispositif suivant la revendication 4, **caractérisé en ce que** le levier de manoeuvre (53) est articulé en rotation sur le bras de liaison (59) autour d'un axe (63) parallèle audit arbre (51), et arrêté en rotation dans la position portante des roulettes (45) au moyen d'une butée (67) solidaire du bras de liaison (59).

6. Dispositif suivant l'une quelconque des revendications 1 à 5, **caractérisé en ce que** le train avant comporte deux roulettes (45) espacées transversalement.

7. Dispositif suivant la revendication 6, **caractérisé en ce que** le levier de manoeuvre (53) est agencé entre les deux roulettes (45) du train avant.

8. Dispositif suivant la revendication 6 ou 7, **caractérisé en ce que** le train arrière comprend une roulette (45) unique.

9. Dispositif suivant l'une quelconque des revendications 1 à 8, **caractérisé en ce que** la structure de montage comprend une pluralité de platines (41) sur lesquelles est fixé le support (6), et **en ce que** sur chaque platine (41) est montée une roulette (45) respective, les platines (41) constituant ensemble une structure déformable.

10. Dispositif suivant l'une quelconque des revendications 1 à 9, **caractérisé en ce que** le levier de manoeuvre (53) comprend deux surfaces d'appui (57, 58) prévues chacune pour assurer, lorsqu'elle est pressée, un basculement du levier (53) dans l'un respectif des deux sens opposés, correspondant au passage des roulettes (45) de l'une à l'autre de leur position escamotée et de leur position portante.

## Claims

1. Device for processing of foodstuffs, comprising:
- a body (3);
- a support (6) on which the body is fitted; and
- a rolling mechanism (31) which is provided with castors (45), and is designed to permit the displacement of the device (1) by rolling on the ground (27);
the mechanism (31) being secured to the support (6), and designed to be able to assume selectively a retracted position and a rolling configuration, in which the castors (45) are supported on the ground, the mechanism (31) comprising a manoeuvring lever (53), the actuation of which makes it possible to go from one configuration to another, and **characterised in that** the support (6) has feet (25) for support on the ground, the feet (25) of the support being supported on the ground in the retracted position, and being raised from the ground in the rolling configuration, and **in that** the mechanism (31) comprises an assembly structure (41) onto which the support (6) is secured, and a front set and a rear set of castors, each castor (45) being able to rotate around its axis, and to pivot around a parallel axis under the effect of actuation of the manoeuvring lever (53), between a retracted position and a support position.

2. Device according to claim 1, **characterised in that** the mechanism (31) comprises a connection arm (59) which makes it possible to connect the pivoting of the castors (45) of the front set and of the rear set.

3. Device according to claim 1 or claim 2, **characterised in that** each castor (45) is fitted such as to rotate around its axis in a fork joint in the shape of a "U" (43) which is fitted such as to pivot on the structure (41).

4. Device according to claim 3, **characterised in that** the castors (45) of the front set have a common axis of pivoting, which takes the form of a shaft (51) which is integral with the manoeuvring lever (53) and the fork joints (43) of the castors (45) of the front set.

5. Device according to claim 4, **characterised in that** the manoeuvring lever (53) is articulated such as to rotate on the connection arm (59) around a shaft (63) which is parallel to the said shaft (51), and the rotation of which is stopped in the support position of the castors (45) by means of a stop (67) which is integral with the connection arm (59).

6. Device according to any one of claims 1 to 5, **characterised in that** the front set comprises two castors (45) which are spaced transversely.

7. Device according to claim 6, **characterised in that** the manoeuvring lever (53) is arranged between the two castors (45) of the front set.

8. Device according to claim 6 or claim 7, **characterised in that** the rear set comprises a single castor (45).

9. Device according to any one of claims 1 to 8, **characterised in that** the assembly structure comprises a plurality of plates (41) onto which the support (6) is secured, and **in that** on each plate (41) there is fitted a respective castor (45), the plates (41) together constituting a deformable structure.

10. Device according to any one of claims 1 to 9, **characterised in that** the manoeuvring lever (53) comprises two support surfaces (57, 58) each designed to ensure that when it is pressed, pivoting of the lever (53) takes place in a respective one of the two opposite directions, corresponding to the passage of the castors (45) from one to the other of their retracted position and their support position.

## Patentansprüche

1. Vorrichtung zur Behandlung von Nahrungsmittelprodukten, umfassend
- einen Körper (3),
- einen Träger (6), auf dem der Körper montiert ist, und
- einen mit Rollen (45) versehenen Rollmechanismus (31), der vorgesehen ist, um die Bewegung der Vorrichtung (1) durch Rollen auf dem Boden (27) zu gestatten,
wobei der Mechanismus (31) auf dem Träger (6) befestigt ist und dafür ausgelegt ist, wahlweise eine eingerückte Konfiguration und eine Rollkonfiguration einzunehmen, in der die Rollen (45) auf dem Boden aufliegen,
wobei der Mechanismus (31) einen Betätigungshebel (53) umfasst, dessen Betätigung den Übergang von einer Konfiguration in eine andere gestattet, **dadurch gekennzeichnet, dass** der Träger (6) Füße (25) zur Auflage auf dem Boden besitzt, die in der eingerückten Konfiguration auf dem Boden aufliegen und in der Rollkonfiguration vom Boden abgehoben sind,
und dass der Mechanismus (31) eine Montagestruktur (41), auf der der Träger (6) befestigt ist, und eine vordere und eine hintere Rollenachse umfasst, wobei jede Rolle (45) sich um ihre Achse drehen kann und sich unter der Wirkung der Betätigung des Betätigungshebels (52) um eine parallele Achse zwischen einer eingerückten Stellung und einer aufliegenden Stellung verschwenken kann.

2. Vorrichtung nach Anspruch 1, **dadurch gekennzeichnet, dass** der Mechanismus (31) einen Verbindungsarm (59) umfasst, der die Verbindung der Verschwenkung der Rollen (45) der vorderen Achse und der hinteren Achse gestattet.

3. Vorrichtung nach Anspruch 1 oder 2, **dadurch gekennzeichnet, dass** jede Rolle (45) um ihre Achse in einer U-förmigen Gabel (43) drehbar montiert ist, die an der Struktur (41) verschwenkbar montiert ist.

4. Vorrichtung nach Anspruch 3, **dadurch gekennzeichnet, dass** die Rollen (45) der Vorderachse eine gemeinsame Schwenkachse besitzen, die von einer Welle (51) gebildet wird, die mit dem Betätigungshebel (53) und mit den Gabeln (43) der Rollen (45) der Vorderachse fest verbunden ist.

5. Vorrichtung nach Anspruch 4, **dadurch gekennzeichnet, dass** der Betätigungshebel (53) an dem Verbindungsarm (59) um eine zu dieser Welle (51) parallele Achse (63) drehbar angelenkt ist und in der aufliegenden Stellung der Rollen (45) mit Hilfe eines mit dem Verbindungsarm (59) fest verbundenen Anschlags (67) in der Drehung gestoppt wird.

6. Vorrichtung nach einem der Ansprüche 1 bis 5, **dadurch gekennzeichnet, dass** die Vorderachse zwei in Querrichtung beabstandete Rollen (45) umfasst.

7. Vorrichtung nach Anspruch 6, **dadurch gekennzeichnet, dass** der Betätigungshebel (53) zwischen den beiden Rollen (45) der Vorderachse angeordnet ist.

8. Vorrichtung nach Anspruch 6 oder 7, **dadurch gekennzeichnet, dass** die Hinterachse eine einzige Rolle (45) umfasst.

9. Vorrichtung nach einem der Ansprüche 1 bis 8, **dadurch gekennzeichnet, dass** die Montagestruktur eine Vielzahl von Platinen (41) umfasst, auf denen der Träger (6) befestigt ist, und dass an jeder Platine (41) eine jeweilige Rolle (45) montiert ist, wobei die Platinen (41) zusammen eine verformbare Struktur bilden.

10. Vorrichtung nach einem der Ansprüche 1 bis 9, **dadurch gekennzeichnet, dass** der Betätigungshebel (53) zwei Druckflächen (57, 58) umfasst, deren jede vorgesehen ist, um, wenn auf sie gedrückt wird, ein Verschwenken des Hebels (53) in einer der beiden entgegengesetzten Sinnen zu gewährleisten, die dem Übergang von einer ihrer Stellungen, und zwar ihrer eingerückten Stellung und ihrer aufliegenden Stellung, in die andere entsprechen.
